Europäisches Patentamt

European Patent Office

Office européen des brevets

(19)

(11) Numéro de publication: **0 255 793**
**B1**

(12) **FASCICULE DE BREVET EUROPEEN**

(45) Date de publication du fascicule du brevet:
**12.09.90**

(51) Int. Cl.⁵: **F27D 11/08**, H05B 7/06,
H05B 7/11

(21) Numéro de dépôt: **87401762.7**

(22) Date de dépôt: **28.07.87**

(54) Four électrique à courant continu de fusion de ferraille.

(30) Priorité: **01.08.86 FR 8611216**

(43) Date de publication de la demande:
**10.02.88 Bulletin 88/6**

(45) Mention de la délivrance du brevet:
**12.09.90 Bulletin 90/37**

(84) Etats contractants désignés:
**AT CH DE ES FR GB IT LI SE**

(56) Documents cités:
**EP-A- 0 096 618**
**EP-A- 0 133 652**
**EP-A- 0 178 981**
**DE-A- 2 434 747**
**DE-A- 3 414 392**
**GB-A- 2 046 560**

(73) Titulaire: **CLECIM, 107 boulevard de la Mission
Marchand, F-92402 Courbevoie Cédex(FR)**

(72) Inventeur: **Janiak, Robert André, Lieu dit "La Loge"
Saint-Romains les Atheux,
F-42660 Saint-Genest-Malifaux(FR)**
Inventeur: **Davené, Jean Georges, 3 rue de la Sabotte,
F-78160 Marly Le Roi(FR)**

(74) Mandataire: **Phélip, Bruno et al, c/o Cabinet Harlé &
Phélip 21, rue de La Rochefoucauld, F-75009 Paris(FR)**

## Description

L'invention a pour objet un four électrique à courant continu de fusion d'une matière brute métallique telle que de la ferraille.

On connaît depuis longtemps des fours électriques utilisés pour la fusion de ferraille ou autre matière brute ferreuse et la réduction du bain métallique obtenu avec addition éventuelle d'éléments d'alliage jusqu'à obtention d'un métal de composition déterminée.

D'une façon générale, un four électrique est constitué d'une cuve limitée par une paroi latérale et un fond recouvert d'une sole en matière réfractaire et fermée par un couvercle amovible en forme de voûte traversée par au moins une électrode qui généralement est consommable et constituée d'une barre de graphite montée coulissante verticalement de façon à pouvoir descendre à l'intérieur de la charge du four, normalement de la ferraille, qui est en contact avec au moins une électrode fixe placée dans la sole.

Dans le cas d'un four à courant alternatif monophasé et du four à courant continu, l'électrode consommable et l'électrode de sole sont reliées au deux pôles d'une source de courant.

Dans le cas d'un four à courant alternatif bi- ou triphasé, les électrodes consommables sont reliées aux pôles de la source de courant et la charge en contact avec l'électrode de sole constitue le neutre du système.

Il se forme ainsi entre la charge et chaque électrode consommable, un ou plusieurs arcs électriques qui produisent la fusion de la ferraille et la formation d'un bain métallique dans le fond de la cuve.

Jusqu'à présent, on utilisait surtout des fours alimentés en courant alternatif mais on a constaté que l'alimentation des électrodes en courant continu apportait de nombreux avantages tels qu'une réduction de bruit et une augmentation du rendement énergétique du fait que l'on peut utiliser des tensions supérieures à celles permises en courant alternatif.

Toutefois, jusqu'à présent, on a évité d'utiliser des intensités très importantes en courant continu car les courants circulant toujours dans le même sens dans les conducteurs, les électrodes et le bain créent des champs magnétiques importants qui dévient les arcs. Pour remédier à cet inconvénient, on a déjà proposé de réaliser l'électrode de sole sous forme d'une pluralité d'éléments conducteurs reliés à la source de courant par un même conducteur de retour et intégré dans le fond en couvrant une zone de celui-ci de surface relativement importante et centrée à la verticale de l'électrode consommable, de façon que l'arc électrique se forme dans l'axe de cette zone conductrice. De plus, pour diminuer les effets produits sur les arcs par les champs magnétiques créés par la circulation du courant dans les conducteurs reliant les électrodes à la source de courant à l'extérieur du four, on a également proposé d'entourer celui-ci d'un écran cylindrique en métal magnétique couvrant la partie de la paroi latérale du four tournée vers la source de courant, de façon à former un noyau magnétique plutôt qu'une "Cage de Faraday", interposée entre les électrodes et les conducteurs extérieurs reliés à la source de courant.

De telles dispositions ne sont souvent pas suffisantes lorsque l'on utilise une électrode consommable unique placée dans l'axe du four.

Mais, pour obtenir des puissances électriques importantes, on a intérêt à faire passer le courant dans plusieurs électrodes de voûte, généralement trois, placées au-dessus d'une ou plusieurs électrodes de sole, ce qui permet de créer plusieurs arcs électriques dans la charge, mais augmente le nombre de conducteurs d'alimentation et de retour produisant des champs magnétiques en multipliant, par conséquent, les effets de déviation des arcs.

Tant que la charge est sous forme de ferraille, les électrodes pénètrent dans celle-ci en y creusant des puits qui, dans une certaines mesure, isolent les arcs les uns par rapport aux autres et favorisent leur stabilité. En revanche, lorsque la charge est totalement fondue, les arcs soumis aux effets magnétiques, créés par le passage du courant dans les électrodes, les conducteurs et d'autres parties de l'installation, peuvent se former dans des directions imprévisibles et sont donc très instables.

La zone dans laquelle se forme les arcs et qui est à la température la plus élevée ne peut donc être main tenue au centre du four et il en résulte que les parois et le fond peuvent être soumis à des températures excessives et à une usure importante du réfractaire.

L'invention remédie à ces inconvénients en réalisant l'écran magnétique d'une façon qui permet de maîtriser et, en tout cas, de réduire les effets de déviation des arcs dûs au passage du courant, même dans le cas d'un four de grande puissance muni de plusieurs électrodes de voûte et de sole. L'invention permet, en outre, en fonction de la position des électrodes, de faire converger les arcs vers une zone déterminée du four.

Conformément à l'invention, l'écran magnétique est disposé le long du fond de la cuve, de façon à couvrir au moins la partie dudit fond entourant chaque connexion d'une électrode de sole avec le conducteur de retour correspondant.

Dans un mode de réalisation particulièrement avantageux, on donne à tout ou partie du fond métallique de la cuve une épaisseur supérieure à l'épaisseur seulement nécessaire pour assurer la résistance mécanique, qui est déterminée en fonction de l'intensité du courant et de l'orientation des conducteurs pour que ledit fond constitue lui-même un écran magnétique de perméabilité suffisante pour réduire les effets de déviation des arcs.

De façon avantageuse, le fond de la cuve est réalisé, au moins partiellement, en un métal à haute perméabilité magnétique relative.

Dans un mode de réalisation plus avantageux, le fond de la cuve étant muni d'ouvertures de passage des électrodes de sole, chaque conducteur de retour est associé à un écran magnétique individuel constitué d'une plaque à haute perméabilité magnétique placée au-dessous de l'ouverture correspondante et dont les dimensions et la position sont déterminées de façon à masquer une longueur suffisante du conducteur vis-à-vis de l'ouverture, en évitant ainsi le passage des lignes de champ correspondantes à travers cette ouverture.

Mais l'invention sera mieux comprise par la description de plusieurs modes de réalisation donnés à titre d'exemple et représentés sur les schémas annexés :

- la Fig. 1 est une vue schématique d'ensemble d'un four électrique de fusion de ferraille ;
- la Fig. 2 représente schématiquement en élévation une cuve de four munie d'un écran supplémentaire de masquage des conducteurs de retour ;
- la Fig. 3 représente, en perspective, un écran de masquage ;
- la Fig. 4 et la Fig. 5 sont des vues de détail représentant, respectivement en vue de dessus et en vue de côté, le positionnement de l'écran de masquage par rapport à l'électrode de sole.

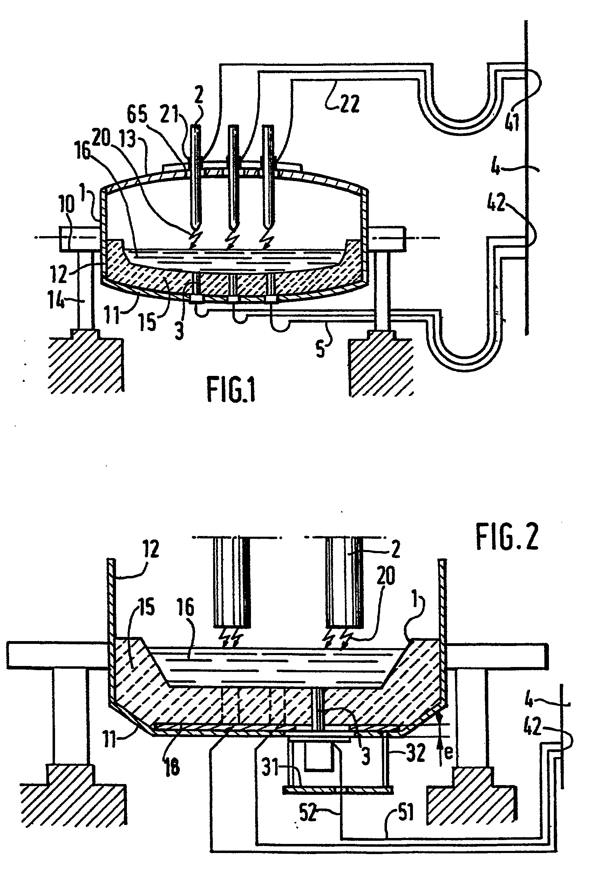

Sur la Fig. 1, on a représenté schématiquement un four électrique de fusion de ferraille comprenant une cuve 1 limitée par un fond 11 et une paroi latérale 12, et fermée par un couvercle amovible en forme de voûte 13. La cuve est supportée par des appuis roulants ou pivotants 14 permettant de la faire basculer autour d'un axe horizontal de façon à déverser, par exemple, d'un côté le laitier et de l'autre côté le métal fondu. Les orifices de coulée, ainsi que l'ouverture de chargement de la ferraille n'ont pas été représentés sur la Figure.

Sur la voûte 13 sont montées des électrodes consommables, par exemple trois électrodes 2 constituées de barres de graphite qui sont montées sur la cuve de façon à coulisser verticalement dans des passages 65, un dispositif 21 servant de moyen de connexion électrique. Les moyens de descente progressive des électrodes 2 n'ont pas été représentés sur la Figure.

Le fond 11 de la cuve 1 est recouvert d'une sole 15 en matière réfractaire dans laquelle sont incorporées des électrodes fixes 3 qui traversent le fond 11. A proximité de la cuve 1 mais, cependant, à une distance suffisante pour être protégée de la chaleur et des projections de métal, est placée une source de courant continu 4, par exemple un transformateur-redresseur comprenant deux pôles respectivement un pôle négatif 41 relié par des conducteurs d'alimentation 22 aux électrodes consommables 2 et un pôle positif 42 relié par des conducteurs de retour 5 aux électrodes de sole 3.

Grâce à ces dispositions bien connues, le passage du courant dans les électrodes entraîne la formation d'arcs électriques 20 entre les électrodes 2 et la ferraille qui, par fusion, forme un bain 16 de métal liquide. Le passage du courant est maintenu jusqu'à fusion complète et obtention, par addition d'éléments d'alliage, de la composition souhaitée.

Pour éviter autant que possible l'influence sur les arcs électriques, des champs magnétiques produits par le passage de courant dans les conducteurs, il est préférable de faire partir les conducteurs dans une direction verticale parallèle aux électrodes jusqu'à une distance suffisante pour que les parties horizontales des conducteurs se raccordant à la source de courant 4 n'aient pas d'influence appréciable sur les arcs. C'est la solution adoptée sur la Figure pour les électrodes de voûte 2. On pourrait adopter une solution analogue pour les conducteurs de retour 5, mais une telle disposition présente l'inconvénient de faire passer les conducteurs dans la zone placée au-dessous de la cuve et dans laquelle il est intéressant de laisser un passage, par exemple pour des chariots de support des poches de coulée.

On préfère donc, dans l'installation selon l'invention, faire passer les conducteurs de retour 5 assez près du fond 11 de la cuve, mais en plaçant le long dudit fond un écran magnétique qui entoure chaque connexion d'une électrode de sole et s'étendant au-dessus de chaque conducteur de retour 5 sur la longueur nécessaire pour réduire les effets de déviation des arcs.

Comme les électrodes de sole 3 sont réparties normalement autour de l'axe du four, on est amené ainsi à réaliser un écran magnétique couvrant au moins toute la partie centrale du fond 11.

De façon particulièrement avantageuse, l'écran magnétique peut être constitué par le fond 11 lui-même ou, en tout cas, par la partie centrale de ce dernier.

Le fond métallique 11 ayant pour fonction de supporter la sole 15 en matière réfractaire sur laquelle se forme le bain de métal 16, normalement la nature du métal dont il est constitué et son épaisseur sont déterminées uniquement pour assurer la résistance mécanique nécessaire en fonction des efforts supportés. Selon la caractéristique essentielle de l'invention, on donne au fond 11 une épaisseur $e$ plus grande et qui est calculée non pas, simplement, en fonction des efforts appliqués, mais en fonction des intensités prévisibles des courants passant dans les conducteurs de retour 5 pour maîtriser les effets sur les arcs des champs magnétiques produits par le passage du courant. On a constaté, en effet, que l'augmentation du prix résultant de cette sur-épaisseur pouvait être compensée par les économies réalisées, par exemple, sur l'usure du réfractaire dans la mesure où l'on contrôlait mieux le centrage des arcs.

Pour augmenter encore l'effet de minimisation des champs magnétiques, il peut même être intéressant de réaliser au moins partiellement le fond 11, par exemple, dans la partie entourant les connexions des électrodes de sole 3 en un alliage spécial à haute perméabilité magnétique relative. La partie constituant l'écran magnétique couvrira au moins un cinquième de la surface du fond, ce dernier pouvant cependant constituer en totalité ledit écran.

D'une façon générale, l'épaisseur de la tôle constituant le fond et sa perméabilité magnétique seront déterminées en fonction l'une de l'autre, pour que les lignes de champ soient absorbées et restent dans la tôle sans saturation de celle-ci, le champ magnétique produit par les conducteurs étant ainsi canalisé et empêché de s'étendre à l'intérieur de la cuve. Ainsi, compte tenu de l'intensité du courant et du positionnement des conducteurs, en particulier des conducteurs de retour 5, on pourra jouer, soit sur l'épaisseur du fond 1, soit sur la nature du métal qui le constitue pour réaliser un bouclier magnétique empêchant les champs de s'étendre à l'intérieur de la cuve. A cet effet, on pourra soit réaliser tout le fond en une tôle plus épaisse, éventuellement en métal feuilleté, soit appliquer sur ou sous le fond existant une plaque supplémentaire 18 (Fig 2) susceptible de constituer avec le fond un écran magnétique ayant l'épaisseur et les dimensions voulues, cette plaque pouvant être réalisée en un alliage à haute perméabilité magnétique. Le dessin et le positionnement de la plaque supplémentaire pourront, d'ailleurs, être déterminés en fonction de l'orientation des conducteurs de retour par rapport aux électrodes consommables 2.

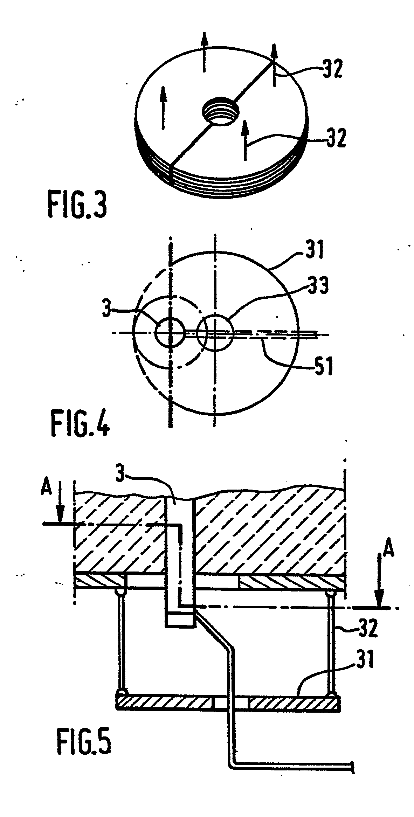

Mais il faut également tenir compte du fait que les électrodes de sole 3 doivent passer dans des orifices ménagés dans le réfractaire 15 et le fond 11, et, comme elles sont réalisées en métal amagnétique, ainsi que leur support et les connexions des conducteurs, chaque électrode 3 constitue une ouverture permettant le passage des lignes de champ à travers le fond. Il est donc préférable pour constituer un écran continu s'opposant au passage du champ, d'associer à chaque électrode de sole 3 un écran de masquage 31 constitué d'une plaque suspendue au fond 11 par exemple, par des tirants 32, et disposé de façon à s'interposer entre l'électrode de sole 3 et le conducteur correspondant 51. Cet écran 31 pourra être constitué d'une tôle épaisse ou, comme on l'a représenté sur la Fig. 3, d'un empilage de tôles permettant d'obtenir la perméabilité voulue.

Comme on l'a représenté sur les Fig. 4 et 5, dans un mode de réalisation particulièrement simple, on utilise des disques 31 percés d'un orifice 33 permettant le passage de la partie verticale 52 du conducteur et décalés par rapport à l'axe de l'électrode 3 du côté du conducteur 51, de façon à masquer la partie horizontale de ce conducteur sur une longueur suffisante pour éviter le passage des lignes de champ à travers l'orifice de passage de l'électrode, compte tenu de la forme et de l'orientation dudit conducteur.

Ce mode de réalisation, comportant de simples plaques soutenues par des tirants est simple, peu onéreux et facilement démontable. Cependant, pour réaliser un masque entre chaque conducteur 5 et l'électrode correspondante 3, on pourrait utiliser une disposition plus compliquée, comme par exemple un capot entourant la partie inférieure de l'électrode de sole 3.

## Revendications

1. Four électrique de fusion de métal à courant continu, comprenant une cuve (1) limitée par un fond (11) recouvert d'une sole réfractaire (15) et une paroi latérale (12) et fermée par un couvercle amovible (13) en forme de voûte, au moins une électrode de voûte consommable (2), montée coulissante verticalement à travers la voûte (13) et au moins une électrode fixe (3) placée dans la sole (15), lesdites électrodes de voûte (2) et de sole (3) étant reliées par des conducteurs, respectivement d'alimentation (22) et de retour (5), à des bornes (41, 42) placées à des potentiels différents d'une source (4) de courant continu pour la formation d'au moins un arc électrique (20) entre l'électrode consommable (2) et la charge constituée par la matière brute telle que de la ferraille et le bain métallique (16) formé par fusion de celle-ci, un écran magnétique étant interposé entre la charge et une partie des conducteurs reliées à la source de courant (4), de façon à maîtriser les effets de déviation des arcs dûs aux champs magnétiques engendrés par les conducteurs, caractérisé par le fait que l'écran magnétique est disposé le long du fond (11) de la cuve (1), de façon à couvrir au moins la partie dudit fond (11) entourant chaque connexion d'une électrode de sole (3) et au moins une partie du conducteur de retour (5) correspondant.

2. Four de fusion selon la revendication 1, caractérisé par le fait que l'épaisseur (e) du fond (11) de la cuve (1) ou d'une partie de celui-ci est supérieure à l'épaisseur seulement nécessaire pour assurer la résistance mécanique et est déterminée en fonction de l'intensité du courant et de l'orientation des conducteurs pour que ledit fond (11) constitue lui-même un écran magnétique de perméabilité suffisante pour réduire les effets de déviation des arcs.

3. Four de fusion selon l'une des revendications 1 ou 2, caractérisé par le fait que le fond (11) de la cuve est réalisé, au moins partiellement, en un métal à haute perméabilité magnétique relative.

4. Four de fusion selon l'une des revendications 1, 2 ou 3, caractérisé par le fait que le fond (11) de la cuve (1) est réalisé en un métal magnétique dont l'épaisseur est déterminée pour résister aux efforts appliqués, et est associé à une plaque (18) en métal à haute perméabilité relative, appliquée sur ou sous ledit fond (11) et recouvrant au moins la partie de ce dernier entourant les connexions des électrodes de sole (3) sur une surface suffisante pour constituer un écran magnétique susceptible d'au moins réduire les effets de déviation des arcs.

5. Four de fusion selon l'une des revendications 1 à 4, caractérisé par le fait qu'au moins la partie du fond (11) qui constitue l'écran magnétique est réalisée en métal feuilleté.

6. Four de fusion selon l'une quelconque des revendications précédentes, caractérisé par le fait que la partie du fond constituant l'écran magnétique représente une proportion comprise entre un cinquième et un de la surface du fond.

7. Four de fusion selon l'une des revendications 1 à 6, caractérisé par le fait que le fond (11) de la cuve (1) étant muni d'ouvertures (30) de passage des électrodes de sole (3), chaque conducteur de retour (51) est associé à un écran magnétique individuel (31) constitué d'une plaque à haute perméabilité magnétique placée au-dessous de l'ouverture (30) correspondante et dont les dimensions et la position sont déterminées de façon à masquer une longueur suffisante du conducteur (51) vis-à-vis de l'ouverture (30), en évitant ainsi le passage des lignes de champ correspondantes à travers cette ouverture (30).

8. Four de fusion selon la revendication 7, caractérisé par le fait que les écrans magnétiques individuels (31) sont constitués chacun par un empilage de tôles suspendu au fond de la cuve.

## Patentansprüche

1. Gleichstrom-Elektroofen zum Metallschmelzen bestehend aus einem Gefäss (1), das durch einen von einem Herd aus feuerfestem Material (15) bedeckten Boden (11) sowie durch eine Seitenwand (12) begrenzt ist und durch einen abnehmbaren als Gewölbe ausgebildeten Deckel (13) geschlossen ist, aus mindestens einer senkrecht durch das Gewölbe (13) gleitbar montierte Abbrand-Deckenelektrode (2) und aus mindestens einer feststehenden, in dem Herd (15) angeordneten Elektrode (3), wobei diese Decken- und Herdelektroden (3) jeweils über Zu- (22) und Rückleitungen (5) an Klemmen (41, 42) angeschlossen sind, die zur Bildung mindestens eines Lichtbogens (20) zwischen der Abbrandelektrode (2) und der aus Rohmaterial wie Eisenschrott und dem durch Einschmelzen des letzeren gebildete Metallbad (16) bestehende Charge an unterschiedliche Potentiale einer Gleichstromquelle (4) gelegt sind, wobei zum Abbau der Lichtbogen-Ablenkwirkungen, die von den durch die Leitungen erzeugten Magnetfelder generiert werden, eine magnetische Abschirmung zwischen der Charge und einem Teil der an die Stromquelle (4) angeschlossenen Leitungen dazwischengeschaltet ist, dadurch gekennzeichnet, dass die magnetische Abschirmung am Boden (11) des Gefässes (1) entlang so angeordnet ist, das sie dadurch mindestens das jeder Anschluss einer Herdelektrode (3) umschliessende Teil von dem Boden (11) und mindestens ein Teil der entsprechenden Rückleitung (5) abdeckt.

2. Schmelzofen nach Anspruch 1, dadurch gekennzeichnet, dass die Dicke (e) von dem Boden (11) des Gefässes (1) oder ein Teil desselben grösser ist als die nur zu Gewährleistung der mechanischen Festigkeit erforderlichen Stärke und in Abhängigkeit der Stromstärke und der Ausrichtung der Leitungen bestimmt wird, damit dieser Boden (11) selbst eine magnetische Abschirmung mit ausreichender Durchlässigkeit zur Minderung der Lichtbogen-Ablenkwirkungen bildet.

3. Schmelzofen nach einem der Ansprüche 1 oder 2, dadurch gekennzeichnet, dass der Gefässboden (11) mindestens teilweise aus einem Metall mit verhältnismässig hoher magnetischer Permeabilität besteht.

4. Schmelzofen nach einem der Ansprüche 1, 2 oder 3, dadurch gekennzeichnet, dass der Boden (11) des Gefässes (1) aus einem Magnetmetall besteht, dessen Stärke zum Standhalten der beaufschlagten Kräfte bestimmt wird, und dem eine Platte (18) aus Metall mit verhältnismässig hoher Permeabilität zugeordnet ist, die auf oder unter dem Boden (11) angeordnet ist, und mindestens den Teil des letzteren abdeckt, das die Anschlüsse der Herdelektroden (3) über eine zur Bildung einer die Lichtbogen-Ablenkwirkungen mindestens abbauenden magnetischen Abschirmung ausreichende Fläche einschliesst.

5. Schmelzofen nach einem der Ansprüche 1 bis 4, dadurch gekennzeichnet, dass mindestens das die magnetische Abschirmung bildende Teil von dem Boden (11), aus Lamellenmetall besteht.

6. Schmelzofen nach irgendeinem der vorhergehenden Ansprüche, dadurch gekennzeichnet, dass das die magnetische Abschirmung bildende Bodenteil einem Grössenverhältnis zwischen einem Fünftel und einem Ganzen der Bodenfläche entspricht.

7. Schmelzofen nach einem der Ansprüche 1 bis 6, wobei der Boden (11) von dem Gefäss (1) Durchgangsöffnungen (30) für die Herdelektroden (3) aufweist, dadurch gekennzeichnet, dass jeder Rückleitung (51) eine einzelne magnetische Abschirmung (31) zugeordnet ist, die aus einer unter Öffnung (30) angeordneten Platte mit hoher magnetischer Permeabilität besteht, deren Abmessung und Lage so bestimmt sind, dass eine ausreichende Länge der Leitung (51) gegenüber der Öffnung (30) verdeckt ist, so dass die entsprechenden Feldlinien nicht durch diese Öffnung (30) laufen.

8. Schmelzofen nach Anspruch 7, dadurch gekennzeichnet, dass die einzelnen Magnetabschirmungen (31) jeweils aus einem am Gefässboden aufgehängten Blechpaket bestehen.

## Claims

1. Electric direct-current metal-melting furnace, comprising a shaft (1) limited by a bottom (11) covered with a refractory hearth (15), and a side wall (12) and closed by a removable cover (13) in the form of a vault, at least one consumable vault electrode (2) mounted so as to be vertically slidable through the vault (13), and at least one fixed electrode (3) located in the hearth (15), the said vault electrodes (2) and the said hearth electrodes (3) being connected respectively by means of feed conductors (22) and return conductors (5) to terminals (41, 42), set at different potentials, of a direct-current source (4), for the formation of at least one electric arc (20) between the consumable electrode (2) and the batch consisting of the raw material, such as scrap, and the metal bath (16) formed as a result of the melting of the latter, a magnetic screen being interposed between the batch and that part of the conductors connected to the current source (4), so as to master the deflection effects on the arcs attributable to the magnetic fields generated by the conductors, characterized in that the magnetic screen is arranged along the bottom (11) of the shaft (1), so as to cover at least that part of the said bottom (11) surrounding each connection of a hearth electrode (3) and at least part of the corresponding return conductor (5).

2. Melting furnace according to Claim 1, characterized in that the thickness (e) of the bottom (11) of the shaft (1) or of part of this is greater than the thickness merely necessary to ensure mechanical resistance and is determined as a function of the current intensity and the orientation of the conductors, so that the said bottom (11) itself forms a magnetic screen of sufficient permeability to reduce the deflection effects on the arcs.

3. Melting furnace according to one of Claims 1 or 2, characterized in that the bottom (11) of the shaft is made, at least partially, of a metal of high relative magnetic permeability.

4. Melting furnace according to one of Claims 1, 2 or 3, characterized in that the bottom (11) of the shaft (1) is made of a magnetic metal, the thickness of which is determined in order to withstand the forces exerted, and is associated with a plate (18) made of a metal of high relative permeability, laid on or under the said bottom (11) and covering at least that part of the latter surrounding the connections of the hearth electrodes (3) over a sufficient surface to form a magnetic screen capable of at least reducing the deflection effects on the arcs.

5. Melting furnace according to one of Claims 1 to 4, characterized in that at least that part of the bottom (11) forming the magnetic screen is made of laminated metal.

6. Melting furnace according to any one of the preceding claims, characterized in that part of the bottom forming the magnetic screen represents a proportion of between one fifth and one of the surface of the bottom.

7. Melting furnace according to one of Claims 1 to 6, characterized in that, with the bottom (11) of the shaft (1) being provided with passage orifices (30) for the hearth electrodes (3), each return conductor (51) is associated with an individual magnetic screen (31) comprising a plate of high magnetic permeability which is located underneath the corresponding orifice (30) and the dimensions and position of which are determined so as to mask a sufficient length of the conductor (51) relative to the orifice (30), thus preventing the corresponding field lines from passing through this orifice (30).

8. Melting furnace according to Claim 7, characterized in that the individual magnetic screens (31) are each formed by a stack of metal sheets suspended on the bottom of the shaft.

FIG.1

FIG.2

FIG.3

32

32

FIG.4

31

33

3

51

FIG.5

A

3

A

32

31